(19) Europäisches Patentamt
European Patent Office
Office européen des brevets

(11) Publication number: 0 218 095 A2

# (12) EUROPEAN PATENT APPLICATION

(21) Application number: 86112184.6

(22) Date of filing: 03.09.86

(51) Int. Cl.[4]: **A 01 N 41/10**

(30) Priority: **04.09.85 US 772584**
**28.08.86 US 900114**

(43) Date of publication of application: **15.04.87 Bulletin 87/16**

(84) Designated Contracting States: **AT BE CH DE FR GB IT LI LU NL SE**

(71) Applicant: **ABBOTT LABORATORIES, 14th Street and Sheridan Road North St, North Chicago Illinois 60064 (US)**

(72) Inventor: **Kenney, Donald S., 1201 Daryl Lane, Northbrook Illinois 60062 (US)**
Inventor: **Kane, John C., 240 E. Winchester, Libertyville Illinois 60048 (US)**
Inventor: **Devisetty, Bala N., 805 Westmoreland, No. 3, Vernon Hills Illinois 60061 (US)**

(74) Representative: **Modiano, Guido et al, MODIANO, JOSIF, PISANTY & STAUB Modiano & Associati Via Meravigli, 16, I-20123 Milan (IT)**

(54) **Fungicides.**

(57) A composition having fungicidal activity comprising a compound of the formula:

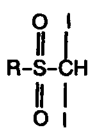

wherein R is loweralkyl, phenylloweralkyl, phenyl; or

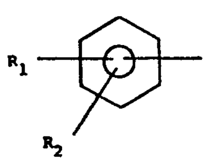

wherein $R_1$ and $R_2$ are indenpendently selected from hydrogen, loweralkyl, halo, $NO_2$, $NH_2$, $NHCOCH_3$ or $(CH_2)_nCOOH$ wherein n is 1-3, is effective in protecting and preserving stored grain from storage molds.

EP 0 218 095 A2

TITLE MODIFIED
see front page

03.09.86

# NOVEL FUNGICIDES FOR STORED GRAINS

## Technical Field

This is a continuation-in-part of U.S. patent application, Serial No. 772,584, filed September 4, 1985.

The invention relates to compositions which are effective as fungicides and, in particular, effective in protecting and preserving stored grain against storage mold.

## Background

Fungi cause significant deterioration in stored grain. For example, fungi can discolor corn kernels and damage or destroy the corn, and some can produce mycotoxins which are toxic to humans and animals. Additionally, fungi are a contributing factor in grain elevator dust explosions. Yearly damage in the United States has been estimated at 300 to 500 million bushels of corn per year.

The fungi that most often cause damage in stored grain are members of the genera *Aspergillus* and *Penicillium*. These fungi are traditionally controlled by reducing grain moistures.

The traditional way of storing grain for long periods in the past has been to use high temperature grain driers to achieve low moistures (14%) to reduce storage fungi damage, making grain less attractive to fungi. However, high temperatures increase the

likelihood of stress cracking, which causes grain kernels to break.

With low-temperature drying, kernel stress is less likely. However, if autumn temperatures are greater than 50°F, the risk of storage molds is excessively high and severe losses can result. Thus, use of low-temperature drying technology has limited use.

Fungicides and preservatives for controlling storage molds have been used. However, by in large the fungicides have been found to be ineffective and unsafe. For example, grain preservatives such as propionic acid and ammonia have been used to prevent mold growth in high-moisture grain. However, both compounds cause odors and/or discoloration of grain. Additionally, these materials are highly corrosive to storage tanks and equipment, which thus limits their practical use. The use of artificial atmospheres ($CO_2$, nitrogen, etc.) has also been utilized but is not practical for current grain storage, transportation, and handling facilities.

## Summary of the Invention

In accordance with the invention, by treating an agricultural host with a composition comprising a diiodomethylsulfone derivative which has fungicidal activity, stored grain can be protected and preserved from mold damage or destruction. The composition is not corrosive and does not cause odors or discoloration of grain. Further, the application of the composition to stored grain eliminates the necessity for high-temperature drying and eliminates or at least reduces the necessity for low-temperature drying.

Brief Description of the Drawings

Figure 1 is a graph showing the percentage (total) fungi infection in corn over time which resulted from testing in accordance with Example 1;

Figure 2 is a graph showing the percentage of Alternaria fungi, infection in corn over time which resulted from testing in accordance with Example 1;

Figure 3 is a graph showing the percentage of Penicillium fungi, infection in corn over time which resulted from testing in accordance with Example 1;

Figure 4 is a graph showing the percentage of Fusarium fungi, infection in corn over time which resulted from testing in accordance with Example 1;

Figure 5 is a graph showing the percentage of A. niger fungi, infection in corn over time which resulted from testing in accordance with Example 1;

Figure 6 is a graph showing the percentage of A. glaucus fungi, infection in corn over time which resulted from testing in accordance with Example 1;

Figure 7 is a graph showing the percentage of Aspergillus fungi, infection in corn over time which resulted from testing in accordance with Example 1;

Figure 8 is a graph showing the percentage of A. flavus fungi, infection in corn over time which resulted from testing in accordance with Example 1;

Figure 9 is a graph showing the percentage of kernels of high moisture rice that were not infected by fungal growth when tested in accordance with Example 5; and

Figure 10 is a graph showing the percentage of kernels of low moisture rice that were not infected by fungal growth when tested in accordance with Example 5.

Disclosure of the Invention

In accordance with the invention agricultural host can be treated for or protected against fungal infection with a composition comprising a compound of the formula:

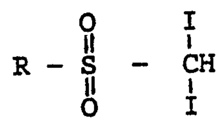

wherein R is loweralkyl, phenylloweralkyl, phenyl; or

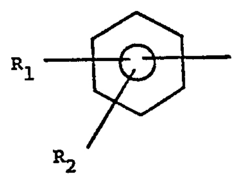

wherein $R_1$ and $R_2$ are independently selected from hydrogen, loweralkyl, halo, $NO_2$, $NH_2$, $NHCOCH_3$ or $(CH_2)_nCOOH$ wherein n is 1-3, is effective in protecting and preserving stored grain from storage molds.

As used herein, the term "loweralkyl" refers to a straight or branched chain alkyl radical having 1-6 carbon atoms, including but not limited to methyl, ethyl, n-propyl, n-butyl, sec-butyl, tert-butyl, iso-butyl, n-pentyl and isopentyl.

As used herein, the term" halo" refers to Cl, F, Br or I.

As used herein, the term "phenylloweralkyl" refers to a phenyl ring appended to a loweralkyl radical.

As used herein, the term "fungal" or "fungus" or "mold" refers to a strain of fungi, including, but

not limited to, <u>Alternaria</u>, <u>Penicillium</u>, <u>Fusarium</u>, and <u>Aspergillus</u>, including <u>A. niger</u> and <u>A. flavus</u>.

As used herein, the term "stored grain" refers to those crops which are stored prior to conversion into human or animal foodstuff including, but not limited to, corn, wheat, barley, soybeans, milo (sorghum), legumes and rice.

As used herein, the term "agricultural host" means stored grains, peanuts, animal feeds and other foodstuffs which are subject to microbial deterioration.

As used herein, the term "ppm" refers to parts by weight of active ingredient per million parts by weight of diluent.

The compounds of the invention may be made as disclosed in U.S. Patent No. 3,615,745 issued October 26, 1971, U.S. Patent No. 3,657,353 issued April 18, 1972, U.S. Patent No. 3,663,623 issued May 16, 1972, and U.S. Patent No. 3,927,100 issued December 16, 1975, all of which are incorporated herein by reference.

For example, of the present invention can be prepared by halogenating R-sulfonyl acetic acids with a sodium hypohalite in an alkaline aqueous solution followed by decarboxylation. The reaction may be represented as follows:

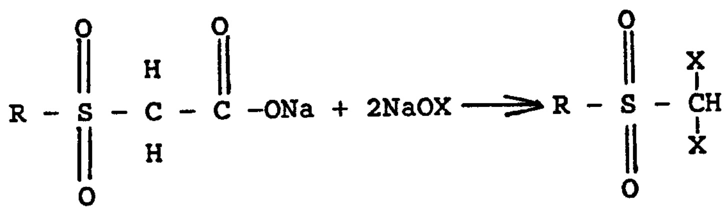

wherein X represents a halogen and R is as represented herein above.

The compounds of the present invention can be used in the form of compositions which are prepared by admixing a compound of the invention with an inert diluent, such as adjuvants or modifiers, to provide

compositions in the form of dusts, wettable powders, high-strength concentrates, and aqueous or non-aqueous dispersions. Thus, the compounds of this invention can be used with a carrier or diluent agent such as a finely divided solid, an organic liquid, water, a wetting agent, a dispersing agent, an emulsifying agent, or any suitable combination of these.

The compositions, especially liquids and wettable powders, may contain surfactants in amounts sufficient to render a given composition readily dispersible in water or in oil. The surfactant used in this invention can be a wetting, dispersing or an emulsifying agent which will assist dispersion of the compound. The surfactant can include such anionic, cationic and nonionic agents.

Suitable surfactants for use in compositions of the present invention are: polyethylene glycol fatty acid esters and fatty alkylol amide condensates, alkylarylsulfonates, fatty alcohol sulfates, dialkyl esters of sodium sulfosuccinate, fatty acid esters of sodium isothionate, polyoxyethylene ethers and thioethers and long-chain quaternary ammonium chloride compounds. Surface-active dispersing agents such as salts of lignin sulfonic acids, low-viscosity methyl cellulose, polymerized sodium salts of alkylnaphthalenesulfonic acids are also suitable.

Among the more preferred surfactants are the anionic and nonionic type. Among the anionic surfactants, preferred ones are alkali metal or amine salts of alkylbenzenesulfonic acids such as dodecylbenzenesulfonic acid, sodium lauryl sulfate, alkylnaphthalenesulfonates, sodium N-methyl-N-oleoyltaurate, oleic acid ester of sodium isothionate, dioctyl sodium sulfosuccinate, sodium dodecyldiphenyloxide disulfonate. Among the nonionic

compounds, preferred members are alkylphenoxy poly (ethyleneoxy) ethanols such as nonylphenol adducts with ethylene oxide; polyethylene oxide adducts to long-chain aliphatic alcohols such as trimethylnonyl polyethylene glycol ethers, polyethylene oxide adducts of fatty and rosin acids, long-chain alkyl mercaptan adducts with ethylene oxide and polyethylene oxide adducts with sorbitan fatty acid esters.

In general, less than 10% by weight of the surfactants will be used in compositions of this invention and ordinarily the amount of surfactants will range from 1-5% but may even be less than 1% by weight.

The compositions of this invention may be in the form of wettable powders, suspension concentrates, dusts, granules, emulsifiable concentrates, or aerosols as discussed hereinbelow. The precise form and concentration of a compound in accordance with the invention, of course, will depend on the intended use of the composition.

(A) Wettable Powders

Wettable powders are water-dispersible compositions containing the active material, an inert solid extender, and one or more surfactants to provide rapid wetting and prevent flocculation when suspended in water.

The inert extenders which are preferred for use in the wettable powders of this invention are of both mineral and non-mineral origin.

The classes of extenders suitable for the wettable powder formulations of this invention are the natural clays, diatomaceous earth, and synthetic mineral fillers derived from silica and silicate. Most preferred fillers for this invention are kaolinites,

attapulgite clay, montmorillonite clays, synthetic silicas, synthetic magnesium silicate, and calcium sulfate dihydrate. The most preferred non-mineral filler is lactose.

Among the more preferred surfactants are the nonionic and anionic type, and those most suitable for the preparation of the dry, wettable products of this invention are solid forms of compounds known to the art as wetters and dispersants. Occasionally a liquid, non-ionic surfactant may serve as both a wetter and dispersant.

Most preferred wetting and dispersing agents are alkylbenzene- and alkylnaphthalenesulfonates; sulfated fatty alcohols, long-chain acid esters of sodium isothionate; esters of sodium sulfosuccinate; sulfated or sulfonated fatty acid esters; petroleum sulfonates; sulfonated vegetable oils; and ditertiary acetylenic glycols. Preferred dispersants are methylcellulose, polyvinyl alcohol, lignin sulfonates, polymeric alkylnaphthalenesulfonates, polymethylene bisnaphthalenesulfonate, sodium N-methyl-N-(long chain acid)taurates and polyethylene oxide adduct with sorbitan fatty acid esters.

Wetting and dispersing agents in these preferred wettable powder compositions of this invention are usually present at concentrations of about 0.5 weight percent to 5 weight percent. The inert extender then completes the formulation. Where needed, 0.1 weight percent to 5.0 weight percent of the extender may be replaced by an anti-foaming and free flow agent.

Thus, wettable powder formulations of the invention will usually contain from about 25 to 90 weight percent active material, from 0.5 to 2.0 weight percent wetting agent, from 0.25 to 5.0 weight percent

dispersant, and from 9.25 to 74.25 weight percent inert extender, as these terms are described above.

When the wettable powder contains a free flow agent or an anti-foaming agent or both, the free flow agent will not exceed about 4-5 percent of the composition, and the anti-foaming agent will not exceed about 0.5 percent by weight of the composition, both replacing equivalent amounts of the inert extender.

These compositions can contain, in addition to a surfactant, finely divided inert diluents such as talcs, natural clays including attapulgite clay and kaolinite clay, pyrophyllite, diatomaceous earths, synthetic fine silicas, calcium silicate, carbonates, and lactose.

Preferred diluents are clays of hydrated aluminum silicate, hydrated aluminum magnesium silicate and hydrated aluminum magnesium iron silicate.

The amount of the finely divided inert solid diluent can vary widely but will generally range from 10 to 98% by weight of the mold inhibiting composition.

Wettable compositions are prepared by blending the ingredients and grinding in a hammer mill or an air attrition mill or similar device. The particle size can vary considerably but will ordinarily be screened so that the finished formulation is under 50 microns.

An example of a preferred wettable powder formulation is set forth below:

| Component | | Range (% by weight) |
|---|---|---|
| Active ingredient | Diiodomethyl-p-tolyl-sulfone | 20-80 |
| Inert extender | Lactose | 5-77 |
| Wetting and dispersing agent/ anti-caking agent | REAX 45A (Sodium salt of lignosulfonic acid and an anionic wetting agent) manufactured by Westvaco, Charleston Heights, South Carolina | 2-10 |
| Anti-caking agent | Silicon Dioxide | 1-5 |

(B) High strength compositions and aqueous suspension concentrates

High-strength compositions generally consist of 90 to 99.5% active ingredient and 0.5 to 10% of a liquid or solid surfactant. Up to approximately half of the surfactant may be replaced by an anti-caking agent such as a synthetic silica. Such high-strength compositions can often be used in a manner similar to the wettable powders but they are also suitable for further formulation.

The aqueous suspension concentrates are prepared by mixing together and milling an aqueous slurry of water-insoluble active ingredient in the presence of surfactants, dispersing agents, anti-foam agents, viscosity stabilizers, etc. Thus, there is obtained a concentrated slurry of very finely divided particles in which the active ingredient is substantially all below 10 microns in size. This concentrated aqueous suspension is characterized by its extremely small particle size so that upon diluting and spraying, a very uniform coverage is obtained.

These aqueous suspension concentrates will contain from 15% to 55% of active ingredient, from 40% to 70% water with the remainder made up of surfactants, dispersing agents, suspending agents and anti-foam agents.

Suspensions in organic liquids can be prepared in a similar manner such as by replacing the water with mineral oil.

An example of a preferred flowable, aqueous formulation is set forth below:

| Component | | Range (% by weight) |
|---|---|---|
| Active ingredient | Diiodomethyl-p-tolyl-sulfone | 20.00 - 60.00 |
| Diluent | Water | 27.29 - 60.80 |
| Suspending agent | Magnesium Aluminum Silicate | 0.10 - 1.00 |
| Wetting and dispersing agent/ anti-caking agent | REAX 45A (Sodium salt of lignosulfonic acid and an anionic wetting agent) manufactured by Westvaco, Charleston Heights, South Carolina | 0.10 - 1.00 |
| Dispersant/ anti-caking agent | Lignin sulfonate, calcium salt | 1.00 - 4.00 |
| Stabilizer | Propylene glycol | 5.00 - 10.00 |
| Anti-foaming agent | Aqueous Emulsion of 30% Silicone Fluid | 0.50 - 2.00 |
| Surfactant | Polyoxypropylene-polyoxyethylene block copolymer | 1.00 - 6.00 |
| Thickner/ Suspending agent | Polysaccharide (e.g. xanthan gum) | 0.01 - 0.20 |

## (C) Dusts

Dusts are dense powder compositions which are intended for application in dry form and are characterized by their free-flowing and rapid settling properties so that they are not readily windborne to areas where their presence is not desired. They contain primarily an active material and a dense, free-flowing, solid extender.

Their performance is sometimes aided by the inclusion of a wetting agent, and convenience in manufacture frequently demands the inclusion of an inert, absorptive grinding aid. For the dust compositions of this invention, the inert extender may be either of plant or mineral origin, the wetting agent is preferably anionic or non-ionic, and suitable absorptive grinding aids are of mineral origin.

Suitable classes of inert solid extenders for use in the dust compositions are those organic or inorganic powders which possess high bulk density and are very free-flowing. They are also characterized by

possessing relatively low surface areas and are poor in liquid absorption. Suitable classes of grinding aids are natural clays, diatomaceous earths, and synthetic mineral fillers derived from silica or silicate. Among ionic and non-ionic wetting agents, the most suitable are the members of the group known to the art as wetting agents and emulsifiers. Although solid agents are preferred because of ease in incorporation some liquid, non-ionic agents are also suitable in the dust formulations.

Preferred inert solid extenders for the dusts of this invention are micaceous talc, pyrophyllite, dense kaolin clays, tobacco dust and ground calcium phosphate rock such as that known as "Phosphodust."

Preferred grinding aids are attapulgite clay, diatomaceous earth, silica, synthetic fine silica and synthetic calcium and magnesium silicates.

Preferred wetting agents are those previously described under wettable powder formulations.

The inert solid extenders in the dusts of this invention are usually present in concentrations of from about 30 to 90 weight percent of the total composition. The grinding aid will usually constitute 5 to 50 weight percent of the composition, and the wetting agent will constitute from about 0 to 1.0 weight percent of the composition. Dust compositions can also contain other surfactants such as dispersing agents in concentrations of up to about 0.5 weight percent.

The wettable powders described above can also be used in the preparation of dusts. While such wettable powders could be used directly in dust form, it is more advantageous to dilute them by blending with the dense dust diluent. In this manner, dispersing agents and anti-foam agents may also be found as components of a dust.

Thus, the dust compositions of this invention will usually comprise about 5 to 20 weight percent active material, 5 to 50 weight percent absorptive filler, 0 to 1.0 weight percent wetting agent, and about 30 to 90 weight percent dense, free-flowing dust diluent, as these terms are used herein. Such dust formulations can contain, in addition, minor amounts of dispersants and anti-foam agents, derived from the wettable powders used to make the dusts.

(D) Granules

Compositions can also be formulated into granules. Such compositions will usually comprise diluent from 65 to 99% and active ingredient from 1 to 35%. To prepare granules the compound can be dissolved in a solvent, and this solution can be sprayed over pre-formed clay granules, expanded vermiculite or the like, while agitating the mixture to distribute the active ingredient over and throughout the granular mass. Such granules can range in particle size of from +60 mesh to +4 mesh, and an active ingredient content of 1 to 6% is preferred. Granules of even smaller size can be prepared similarly and are applied from appropriately designed equipment. It is also possible to make such granules by mixing the finely divided diluent and finely divided compounds, for instance by grinding together, and then forming granules by adding water, tumbling and drying the resulting spheres. It is also possible to mix a finely divided compound with granular carriers such as attapulgite or vermiculite and then binding the active ingredient to ingredient carrier by spraying the whole with a non-volatile liquid.

(E) Emulsifiable Suspensions

Emulsifiable oil compositions can also be employed with one or more of the compounds of this invention. In these compositions, surfactants and an oil form a liquid which can be conveniently poured and measured. Such liquid concentrates can be mixed with water at the point of application. Such compositions have the advantage that the oil will often act as a foam inhibitor and thus reduce the tendency for large amounts of surfactants to form objectionable foam. These oil formulations are dispersions of the compounds in finely divided form in non-solvent carriers. A non-solvent carrier is an oil in which the compounds have low solubility, for instance, less than about 0.1% at 25°C. Many aliphatic hydrocarbons, vegetable and mineral oils are examples of such non-solvent carriers.

In these emulsifiable oil suspensions, the compounds will be present in amounts ranging from 5 to 35% by weight. Upon mixing with water at the point of application, the oil suspension will be diluted, so that in the final formulation the active agent will be present in amounts ranging from 0.5 to 2% by weight.

(F) Aerosols

Still another liquid formulation which is particularly convenient for small scale use is the "aerosol" formulation which is packaged under pressure in a suitable container. The liquid phase may be a suspension, emulsion, or solution. For simplicity in preparation and use, solutions are preferred. The pressure may be supplied by low-boiling liquids such as propane or chlorofluorocarbons, or by relatively insoluble gases such as carbon dioxide or nitrous

oxide. The chlorofluorocarbons are preferred for a combination of good solvent power and lack of flammability.

It is preferred that the active ingredient remain totally dissolved in all solution formulations at 0°C or as low a storage temperature as can be reasonably expected for prolonged periods. In order to insure this, co-solvents, which may be water-miscible even in emulsifiable concentrates, may also be included in the formulations.

Organic liquids suitable for preparation of solutions, suspensions and emulsifiable concentrates of the compounds of this invention include alcohols, glycols, cellosolves, carbitols, ketones, esters, sulfoxides, sulfones, sulfamides, amides, paraffinic hydrocarbons, aromatic hydrocarbons and halogenated hydrocarbons.

Applications of the compositions of the invention may be made at various convenient times depending on the host being preserved. For example, with high moisture corn, a compound in accordance with the invention formulated as a solution, suspension or dust, can be added as corn is being augered into storage. With peanuts or potatoes, compositions can be added at digging, harvesting or processing. For animal or poultry feed or human food, composition can be added during processing of the same.

The following example illustrates the application of the compounds of the invention as a fungicide for stored grain.

Example 1

Treatment of Corn with Test Compound (R is p-tolyl)

Freshly harvested corn was randomly divided into five groups consisting of three treatment groups utilizing a compound in accordance with the invention, specifically diiodomethyl-p- tolyl-sulfone, and a control group, which received no treatment. Each group of corn was placed into a section of a specially designed 5000 bushel bin. Ambient air was used to dry the corn down to the optimal moisture level of 15.5%. At weekly intervals during and after the air drying process, corn samples were taken from the various sections of the bin. Samples were tested by conventional plate count methods to determine the overall percentage of fungi present in the samples as well as the percentage of specific types of fungi that were present in the samples. The results of such testing are set forth in Figures 1-8.

It is clear from these results that the corn treated with an active compound of the invention demonstrates a significant decrease in fungal infection relative to the untreated corn.

Example 2

Effect of Test Compounds on Non-Aerated Corn

Ninety lbs. of corn that had been harvested and hand shelled, was dried to about 12% moisture. The corn was stored in plastic containers until used. The corn was placed in a cement mixer and the moisture increased to 16-18% by adding with a sprayer 3.0 liters of deionized water and mixed for 30 minutes in a mixer until the water was completely absorbed. The corn was then divided into aliquots and put into freezer

containers. 250 mg of each test compound was weighed and dissolved into 12.1 ml of alcohol (100 ppm). For 10 pm treatment, the resultant mixture was diluted 1:10 in alcohol. The resultant mixture (10 and 100 ppm) was applied at the rate of 2.2 ml of mixture/pound of corn. After treatment, the corn was placed back into the freezer containers and incubated at room temperature. Samples of the treated corn were removed, surfaced sterilized, plated on malt-salt agar and read after 7 days of incubation. The results are shown in Table I.

Table 1

| R | Conc. (PPM) | PERCENT KERNAL INFECTION 3 DAYS | 7 DAYS | 14 DAYS | 21 DAYS | 28 DAYS |
|---|---|---|---|---|---|---|
| p-tolyl | 10 | 46 | 34 | 48 | 40 | 42 |
| p-tolyl | 100 | 32 | 30 | 12 | 30 | 20 |
| tert-butyl | 10 | 48 | 46 | 56 | 34 | 48 |
| tert-butyl | 100 | 52 | 30 | 42 | 36 | 44 |
| nitrophenyl | 10 | 31 | 46 | 46 | 74 | 100 |
| nitrophenyl | 100 | 46 | 36 | 42 | 60 | 86 |
| n-pentyl | 10 | 34 | 32 | 34 | 24 | 14 |
| n-pentyl | 100 | 12 | 2 | 8 | 8 | 6 |
| n-propyl | 10 | 36 | 34 | 28 | 14 | 24 |
| n-propyl | 100 | 14 | 6 | 10 | 8 | 6 |
| 1-methylpropyl | 10 | 24 | 28 | 32 | 26 | 18 |
| 1-methylpropyl | 100 | 6 | 14 | 16 | 6 | 6 |
| methyl | 10 | 50 | 28 | 38 | 24 | 32 |
| methyl | 100 | 4 | 6 | 8 | 8 | 6 |
| 2-carboxyethyl | 10 | 38 | 48 | 36 | 40 | 92 |
| 2-carboxyethyl | 100 | 32 | 44 | 50 | 18 | 42 |
| Untreated Control* | | 38 | 50 | 49 | 90 | 100 |

* Initial kernel infection was 22%.

Example 3

Effect of Test Compounds on Non-Aerated Corn

Ninety-six lbs. of corn that had been harvested and hand shelled, was dried to about 12% moisture. The corn was stored in plastic containers until used. The corn was placed in a cement mixer and moisture increased to 16-18% by adding with a sprayer 3.0 liters of deionized water and mixed for 30 minutes in the mixer until the water was completely absorbed. The corn was divided into aliquots and put into freezer containers. 250 mg of each test compound was weighed and dissolved into 12.1 ml of alcohol to produce test compounds at 100 ppm. For 10 ppm treatment, the resultant mixture was diluted 1:10 in alcohol. The resultant mixture (10 and 100 ppm) was applied to the corn at a rate of 2.2 ml mixture/pound of corn. After the treatment, the corn was placed back in freezer containers and incubated at room temperature. Samples of the treated corn was removed, surfaced sterilized, plated on malt-salt agar and read after 7 days incubation. The results are shown in Table 2.

Table 2

| R | Conc. (PPM) | PERCENT KERNAL INFECTION 3 DAYS | 7 DAYS | 14 DAYS | 21 DAYS | 28 DAYS |
|---|---|---|---|---|---|---|
| p-tolyl | 10 | 24 | 24 | 64 | 90 | 100 |
| p-tolyl | 100 | 20 | 20 | 26 | 44 | 42 |
| p-acetyl aminophenyl | 10 | 42 | 38 | 96 | 98 | 100 |
| p-acetyl aminophenyl | 100 | 28 | 34 | 70 | 100 | 98 |
| n-heptyl | 10 | 22 | 26 | 22 | 42 | 70 |
| n-heptyl | 100 | 14 | 6 | 16 | 16 | 20 |
| p-aminophenyl | 10 | 42 | 54 | 78 | 96 | 98 |
| p-aminophenyl | 100 | 36 | 26 | 72 | 90 | 96 |
| p-chlorophenyl | 10 | 16 | 34 | 80 | 96 | 100 |
| p-chlorophenyl | 100 | 18 | 24 | 26 | 22 | 44 |
| p-tert-butyl-phenyl | 10 | 28 | 36 | 76 | 96 | 96 |
| p-tert-butyl-phenyl | 100 | 16 | 36 | 40 | 32 | 58 |
| 2,4-dimethyl-phenyl | 10 | 24 | 40 | 74 | 90 | 100 |
| 2,4-dimethyl-phenyl | 100 | 14 | 24 | 32 | 42 | 54 |
| 3,4-dichloro-phenyl | 10 | 38 | 40 | 70 | 94 | 100 |
| 3,4-dichloro-phenyl | 100 | 36 | 24 | 50 | 52 | 74 |
| benzyl | 10 | 48 | 30 | 98 | 98 | 100 |
| benzyl | 100 | 14 | 34 | 36 | 44 | 50 |
| Untreated Contol * | | 24 | 50 | 100 | 100 | 100 |

* Initial kernel infection was 44%.

## Example 4

## Sorghum, Soybeans and Wheat Treatment

Twenty-five lbs. each of sorghum (12.1% moisture), soybeans (10.2% moisture) and wheat (13% moisture) were placed in a cement mixer and the moisture increased to 20% on sorghum, 16% on soybeans and 20% on wheat by mixing deionized water with the grain in the cement mixer (900 ml to sorghum, 660 ml to soybean and

800 ml to wheat). The moist grain was then divided into 5 batches. After treatment with a test compound (R is p-tolyl), each sample was incubated and tested for internal fungal infection. The results are shown in Table 3.

Table 3

| Grain | Conc. (PPM) | 2 Weeks | 4 Weeks |
|---|---|---|---|
| Sorghum | 250 | 76 | 66 |
| Sorghum | 100 | 76 | 74 |
| Sorghum | 50 | 86 | 94 |
| Sorghum | 25 | 86 | 82 |
| Sorghum | 0 | 92 | 96 |
| Soybeans | 250 | 20 | 46 |
| Soybeans | 100 | 58 | 56 |
| Soybeans | 50 | 42 | 52 |
| Soybeans | 25 | 32 | 48 |
| Soybeans | 0 | 82 | 100 |
| Wheat | 250 | 16 | 42 |
| Wheat | 100 | 30 | 42 |
| Wheat | 50 | 60 | 76 |
| Wheat | 25 | 58 | 82 |
| Wheat | 0 | 98 | 100 |

Example 5

Rice Treatments

Batches of rice were treated with a test compound (R is p-tolyl). The compound was applied in 6 oz. of water per 100 l bs. of rice. Water was used as a control. Baskets of rice were placed in an accelerated aging environment of 23°C and 85% relative humidity. Samples were taken every two weeks and tested for moisture and 50 kernels plated on malt salt agar to determine the amount of fungal infection.

With the rice harvested at 37% moisture, 320 ppm and 1280 ppm provided the best control after

week two of the experiment (Fig. 9). With rice harvested at 22% moisture the best control of field fungi was obtained with 40 ppm (Fig. 10).

The foregoing is merely illustrative of the invention and is not intended to limit the invention to the disclosed compounds. Variations and changes which are obvious to one skilled in the art are intended to be within the scope and nature of the invention which are defined in the appended claims.

WHAT IS CLAIMED IS:

1. A method of preserving and protecting agricultural hosts against fungal attack comprising treating said host with at least 10 ppm of a compound of the formula:

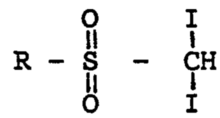

wherein R is loweralkyl, phenylloweralkyl, phenyl; or

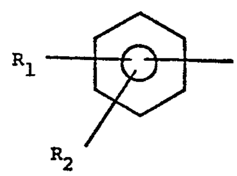

wherein $R_1$ and $R_2$ are independently selected from hydrogen, loweralkyl, halo, $NO_2$, $NH_2$, $NHCOCH_3$ or $(CH_2)_nCOOH$ wherein n is 1-3, is effective in protecting and preserving stored grain from storage molds.

2. The method of Claim 1 wherein the host is corn, wheat, soybean, sorghum or rice..

3. The method of Claim 1 wherein R is 4-chlorophenyl, 2-chloro-4-methylphenyl, 4-methylphenyl 3,4-dichlorophenyl, 4-aminophenyl, 4-t-butylphenyl, 2,4-dimethylphenyl, benzyl or n-loweralkyl.

4. The method of Claim 1 wherein R is n-loweralkyl.

5. A composition having fungicidal activity comprising of at least 10 ppm of a compound of the formula:

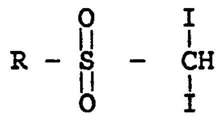

wherein R is loweralkyl, phenylloweralkyl, phenyl; or

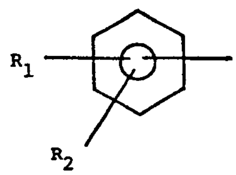

wherein $R_1$ and $R_2$ are independently selected from hydrogen, loweralkyl, halo, $NO_2$, $NH_2$, $NHCOCH_3$ or $(CH_2)_nCOOH$ wherein n is 1-3; a diluent; a wetting and dispersing agent; and an anti-caking agent.

6. The composition of Claim 5 wherein the diluent is lactose, the wetting and dispersing agent is the sodium salt of lignosulfonic acid impregnated with an anionic wetting agent and the anti-caking agent is silicon dioxide.

7. The composition of Claim 5 further comprising a suspending agent, a stabilizer, an anti-foaming agent, a surfactant and a thickener.

8. The composition of Claim 7 wherein the diluent is water, the suspending agent is magnesium aluminum silicate, the dispersant and anti-caking agent is the calcium salt of lignin sulfonate, the wetting and dispersing agent is the sodium salt of lignosulfonic acid impregnated with an anionic wetting agent, the stabilizer is propylene glycol, the anti-foaming agent is silicone fluid, the surfactant is polyoxypropylene-polyoxyethylene block copolymer and the thickener is xanthan gum.

Case 4381
35-1710j

# % OF KERNELS INFECTED WITH FUNGI (TOTAL) OVER TIME

FIG. 1

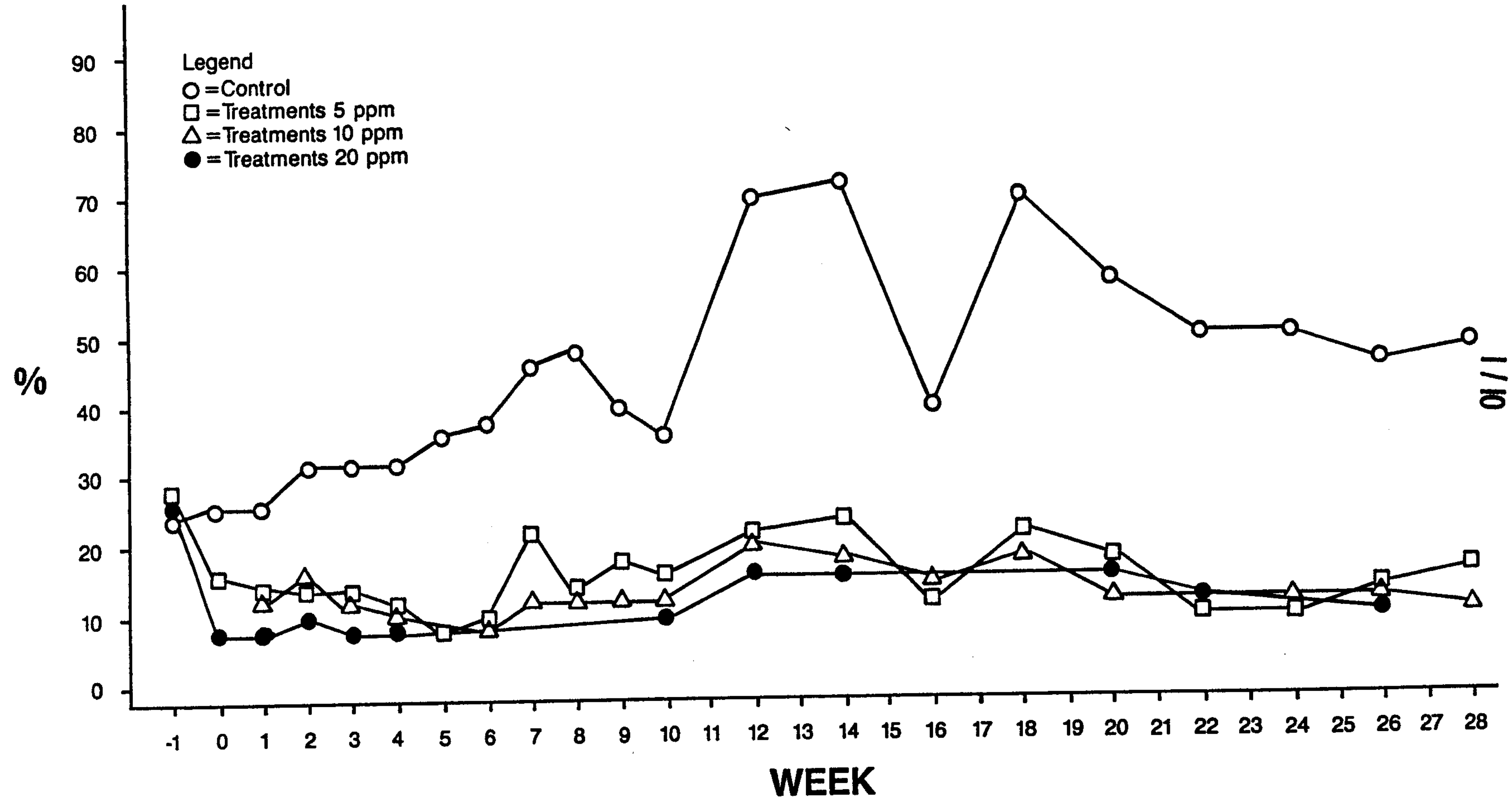

11.23.09.86

# % OF KERNELS INFECTED WITH ALTERNARIA OVER TIME

FIG. 2

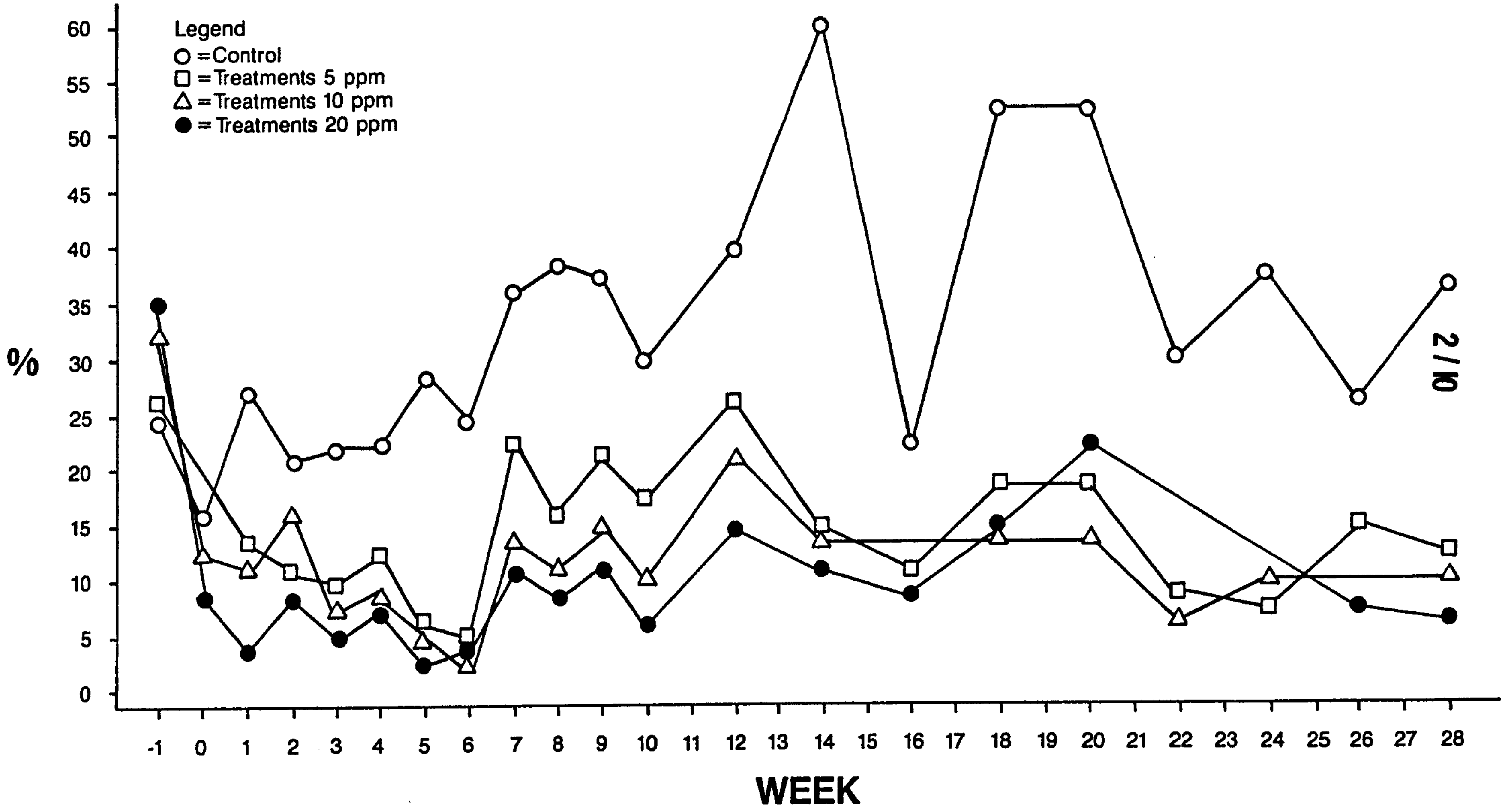

0218095

# % OF KERNELS INFECTED WITH PENICILLIUM OVER TIME

FIG. 3

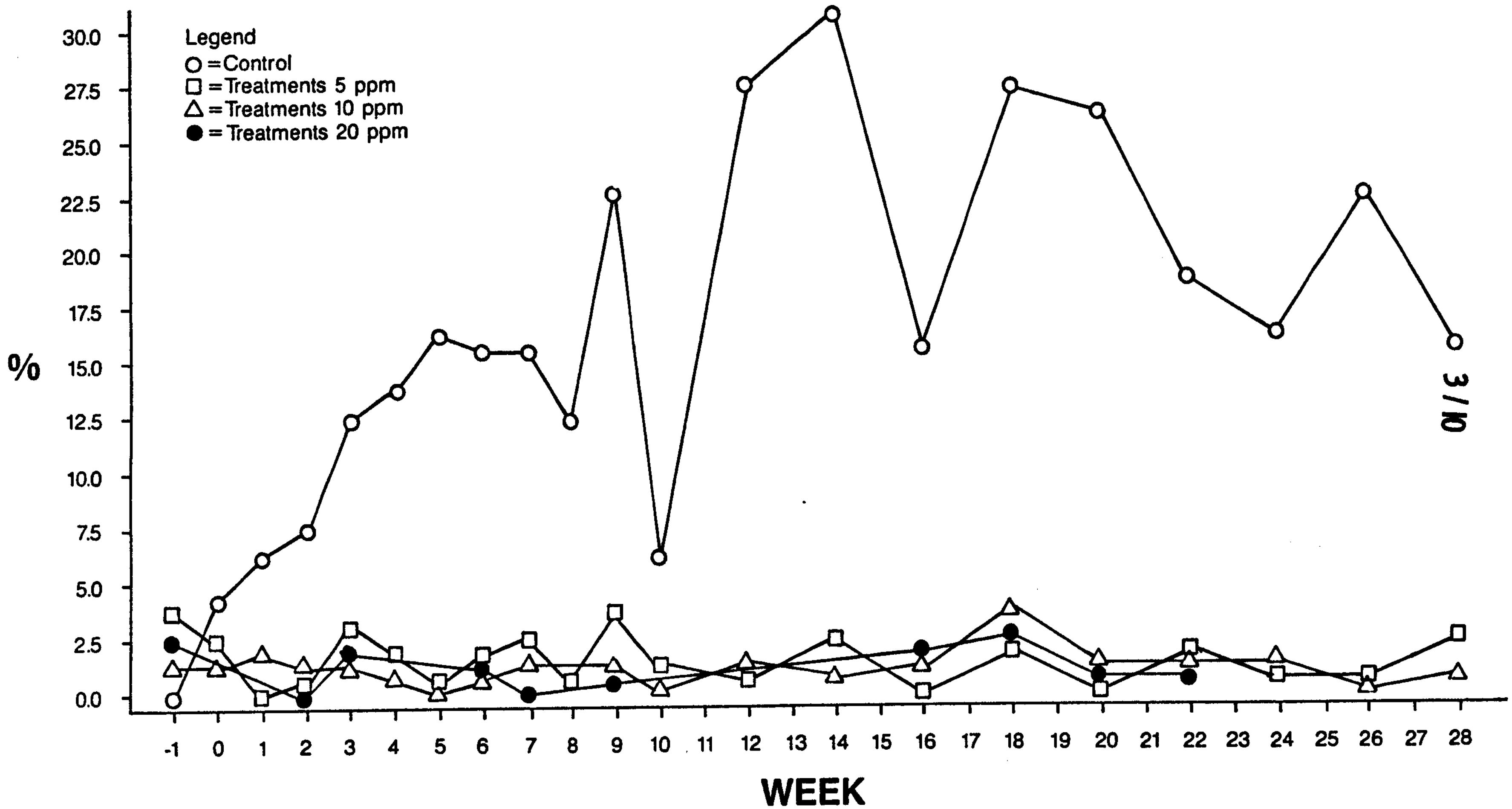


3/10

0218095

# % OF KERNELS INFECTED WITH FUSARIUM OVER TIME

FIG. 4

4 / 10

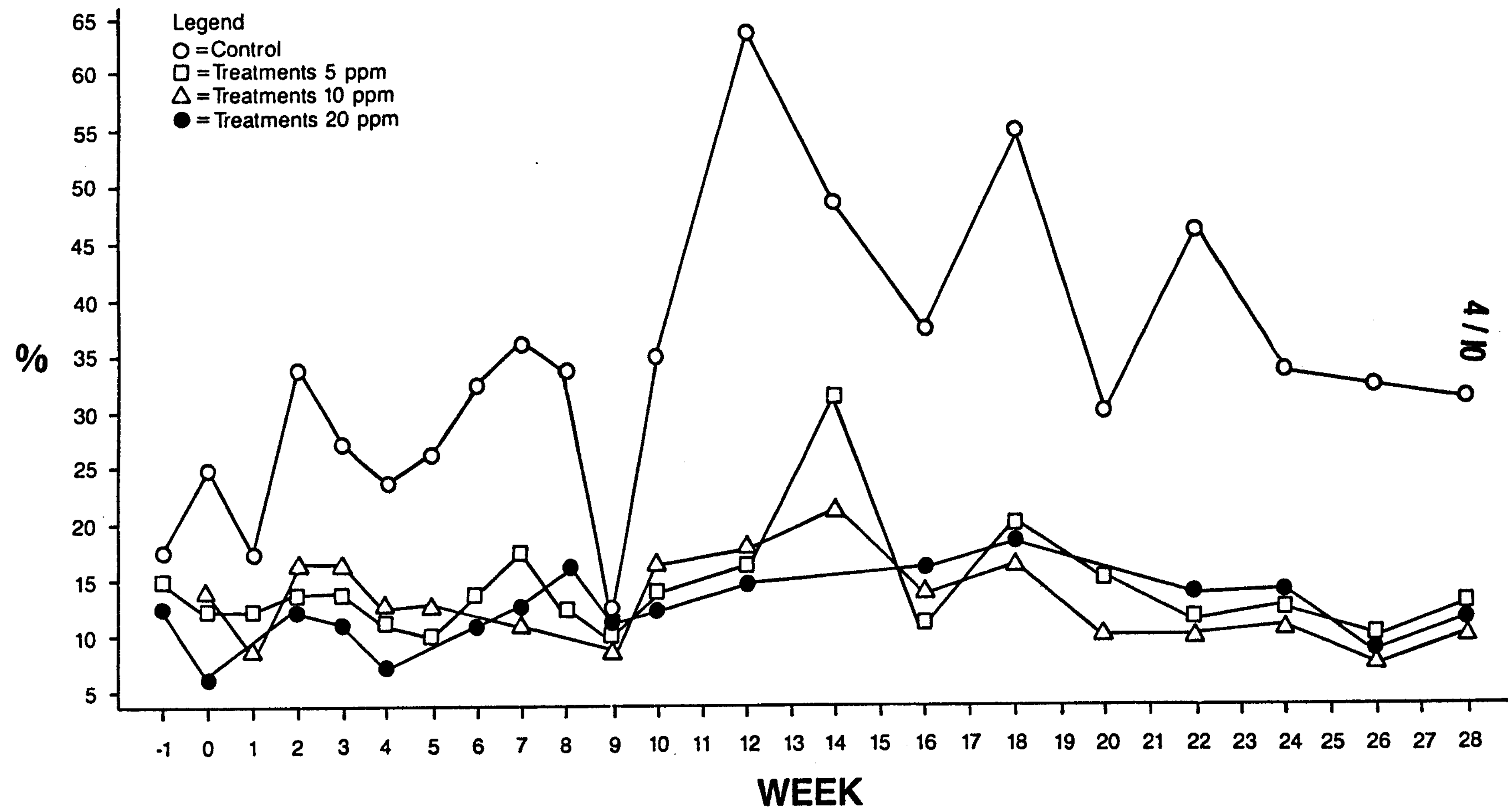

11.23.09.86

# % OF KERNELS INFECTED WITH A. NIGER OVER TIME

FIG. 5

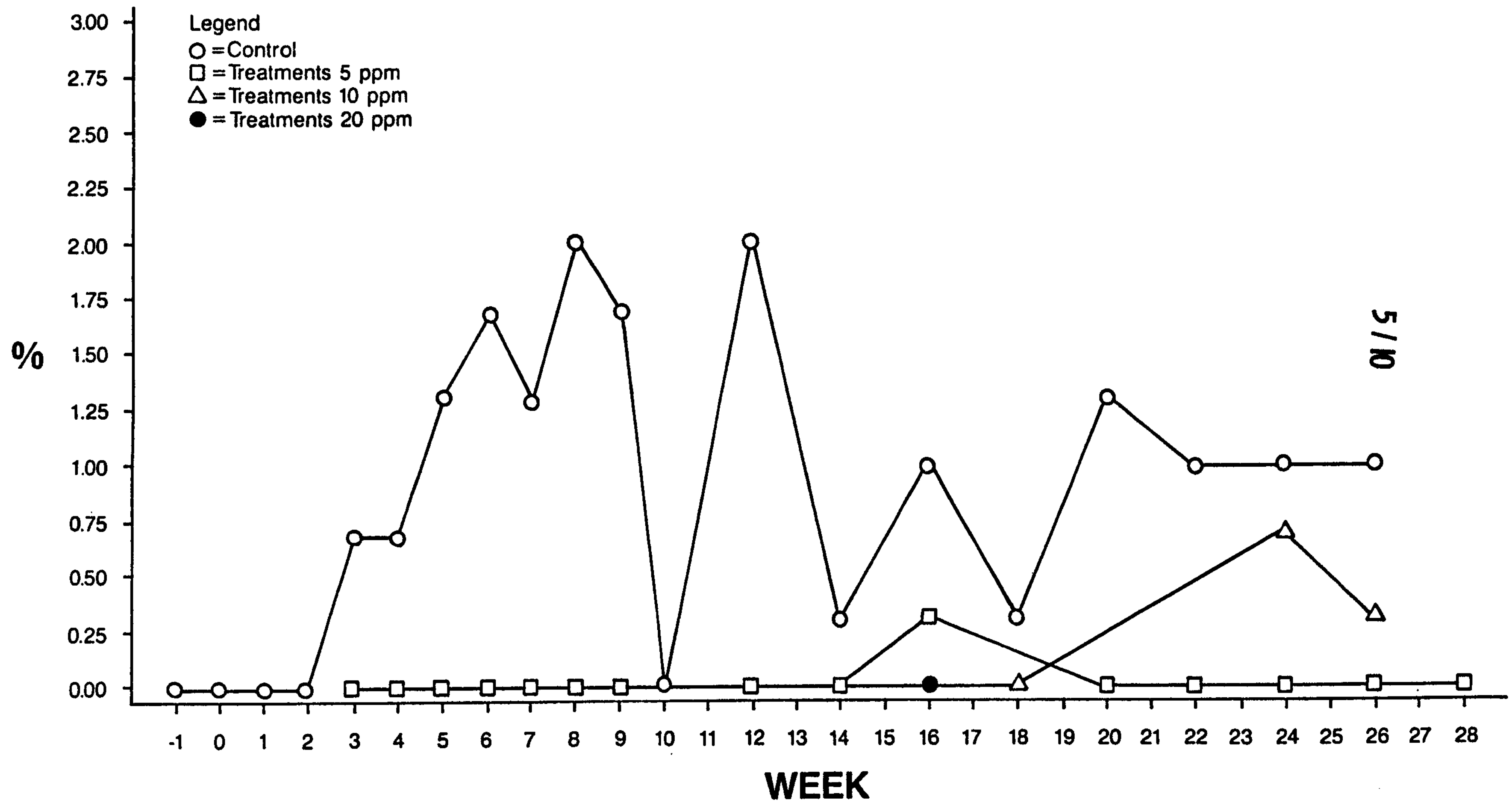


5/10

0218095

# % OF KERNELS INFECTED WITH A. GLAUCUS OVER TIME

FIG. 6

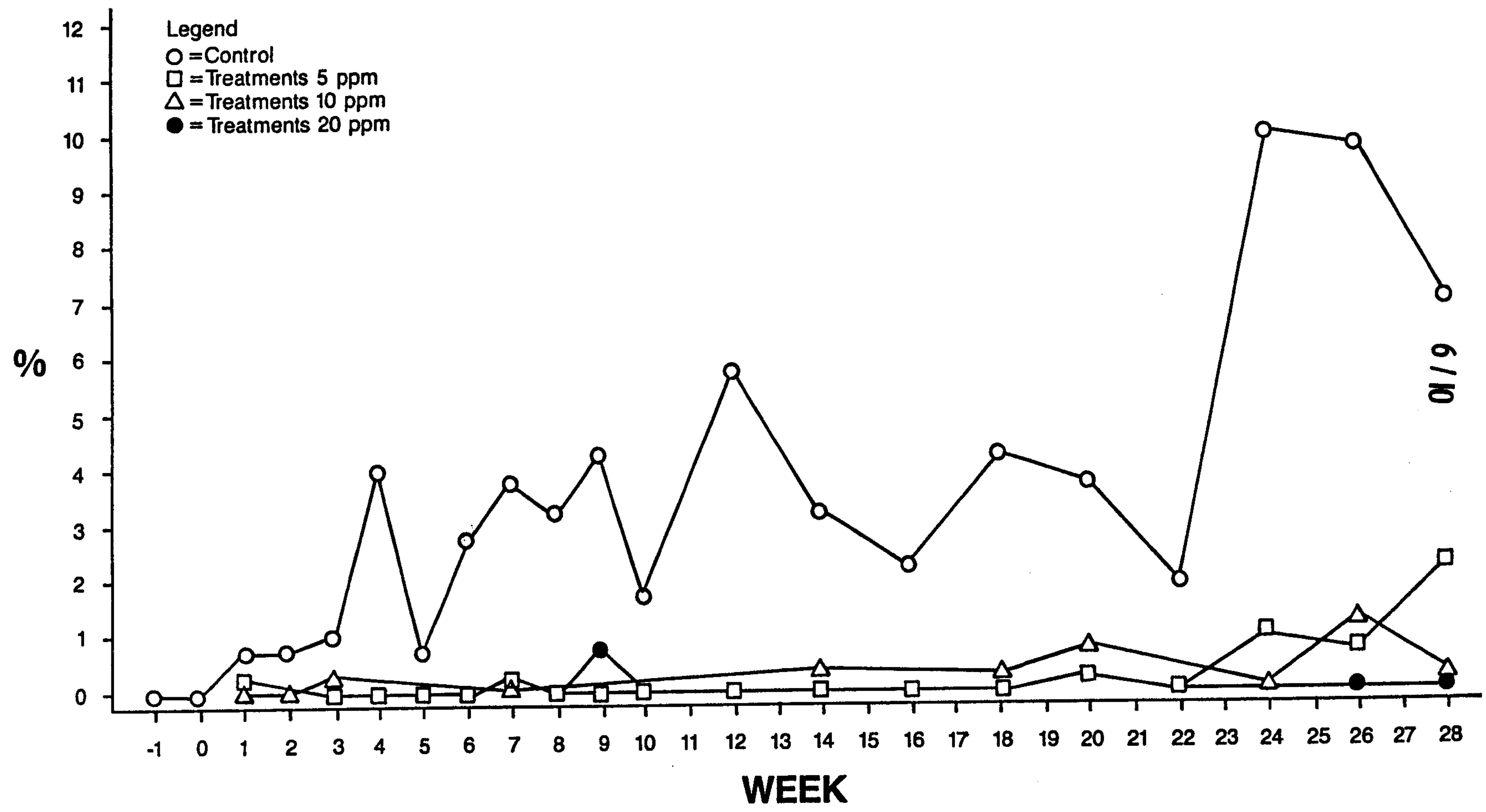

11.23.09.86

# % OF KERNELS INFECTED WITH ASPERGILLUS OVER TIME

FIG.7

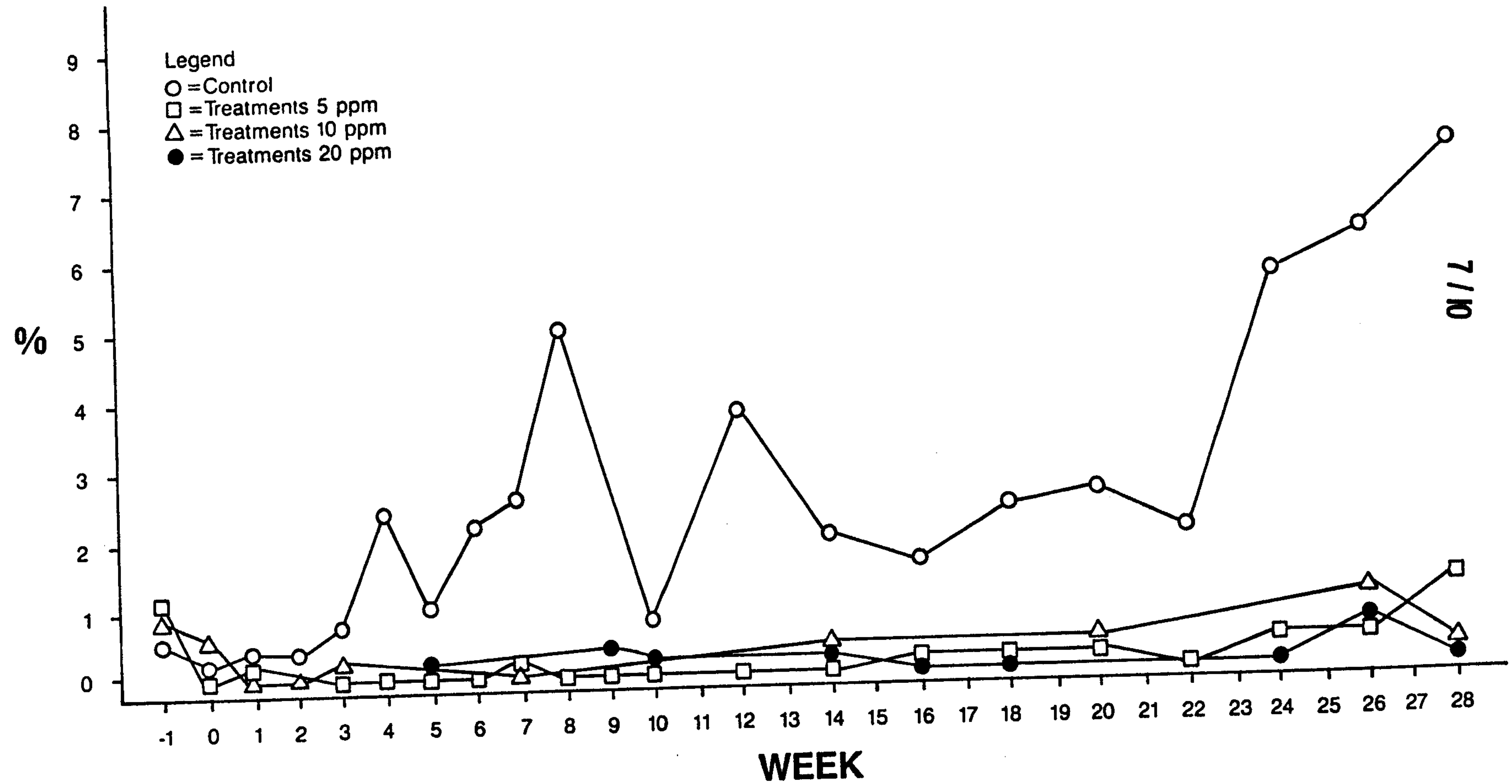

# % OF KERNELS INFECTED WITH A. FLAVUS OVER TIME

FIG. 8

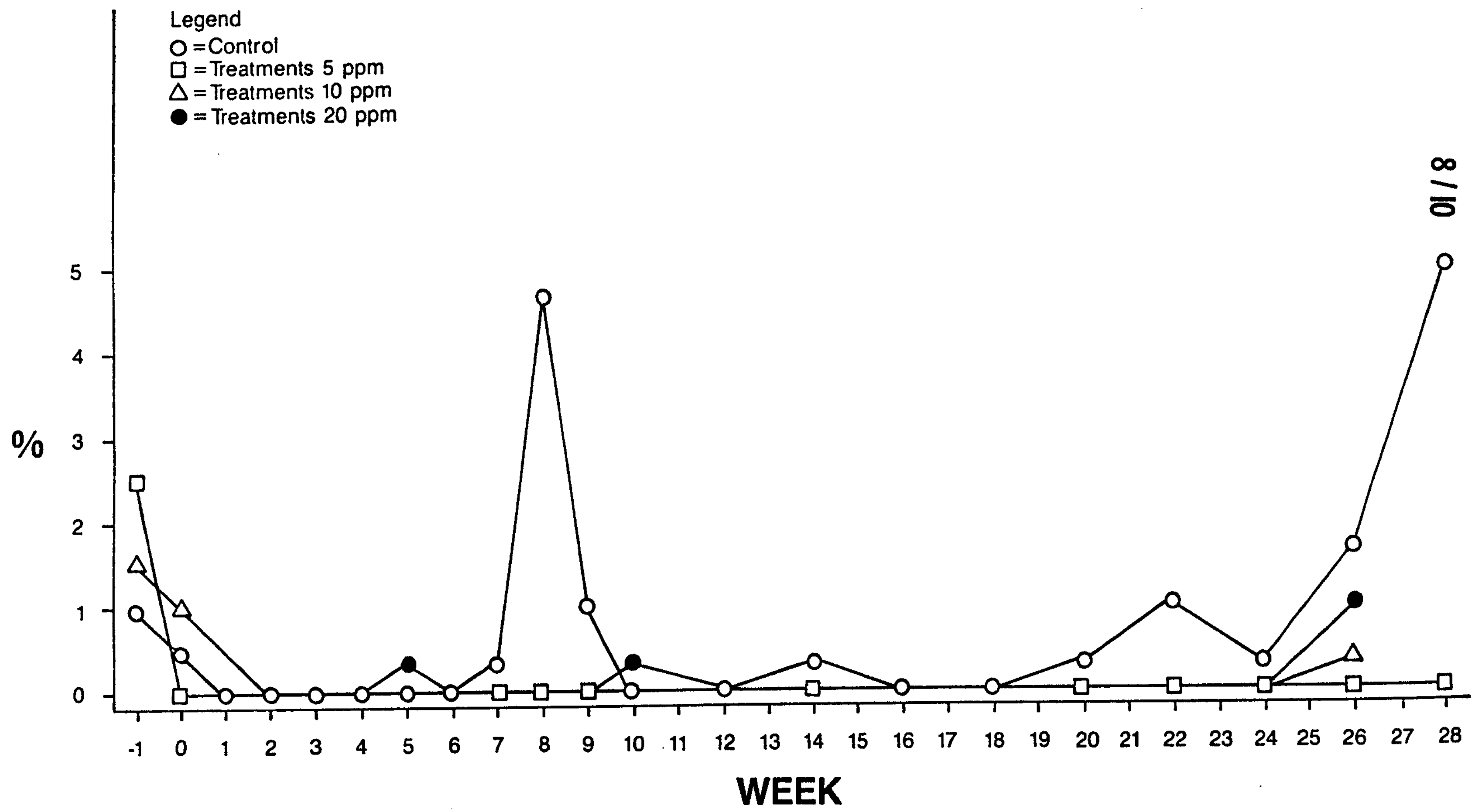

# FIG. 9

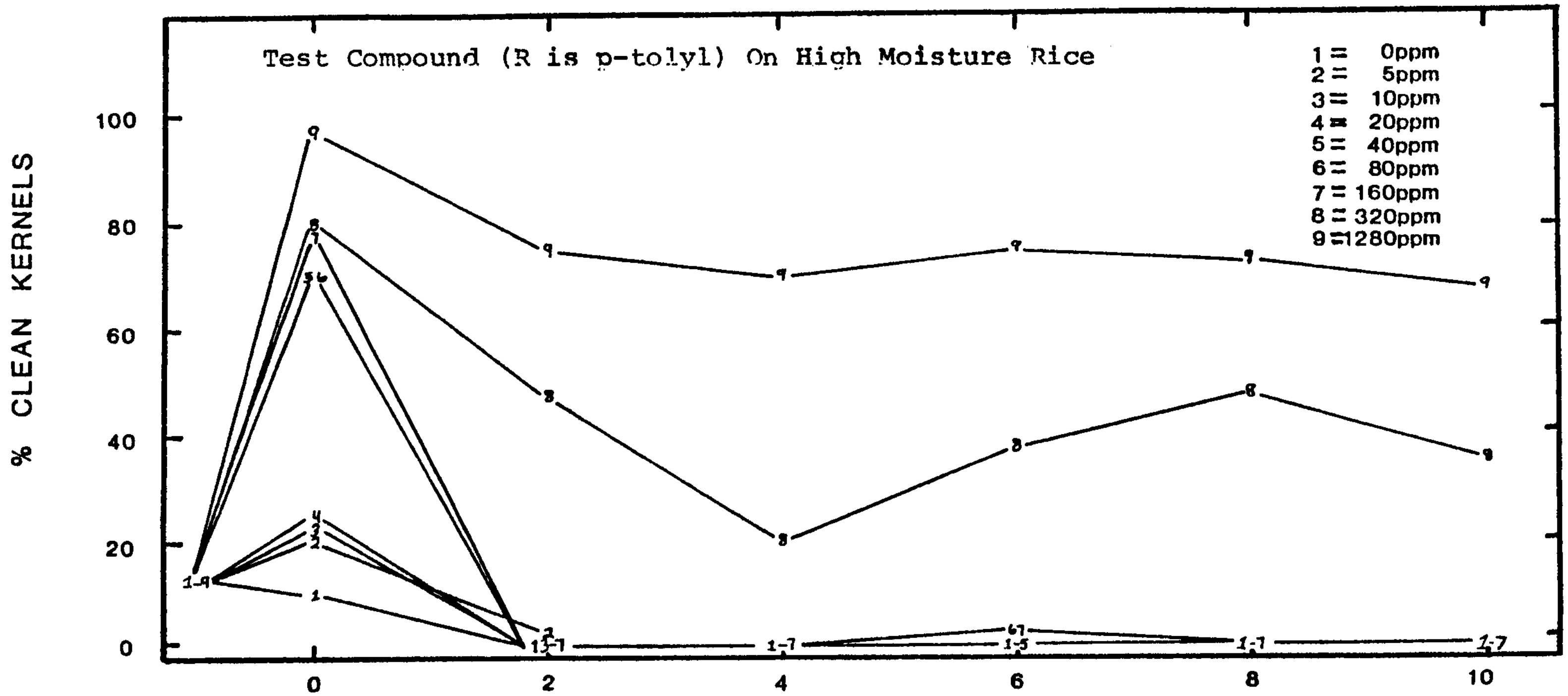


Percent kernels out of 100 without fungal growth

# FIG. 10

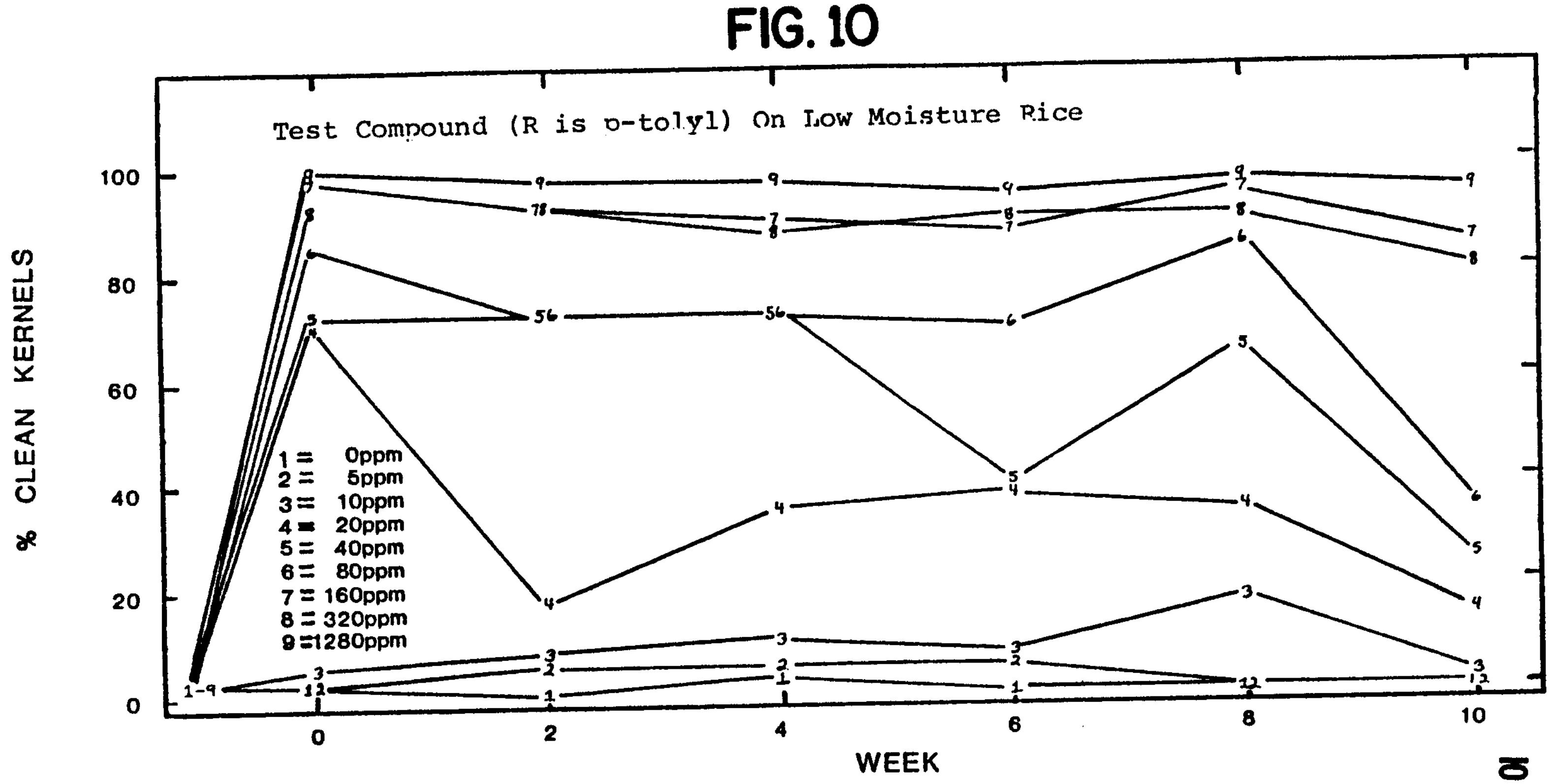


Percent kernels out of 100 without fungal growth